# EUROPEAN PATENT SPECIFICATION

(11) **EP 3 083 749 B1**
(45) Date of publication and mention of the grant of the patent: **22.01.2020**
(21) Application number: 14824264.7
(22) Date of filing: 11.12.2014
(51) Int. Cl.: C08G 59/17, C08G 59/50, C08G 59/66

(54) **PROCESS FOR FORMING AN ORGANIC POLYMER IN A REACTION OF A POLYENE, AN EPOXY RESIN AND A MIXTURE OF THIOL AND AMINE CURING AGENTS**
VERFAHREN ZUR BILDUNG EINES ORGANISCHEN POLYMERS IN EINER REAKTION EINES POLYENS, EINES EPOXIDHARZES UND EINES GEMISCHS VON THIOL- UND AMINHÄRTUNGSMITTELN
PROCÉDÉ DE FORMATION D'UN POLYMÈRE ORGANIQUE DANS UNE RÉACTION D'UN POLYÈNE, D'UNE RÉSINE ÉPOXY ET D'UN MÉLANGE D'AGENTS DE DURCISSEMENT THIOL ET AMINE

(30) Priority: 18.12.2013 US 201361917819 P
(43) Date of publication of application: 26.10.2016
(73) Proprietor: Dow Global Technologies LLC, Midland, MI 48674 (US)
(72) Inventor: COLSON, Adam C., Lake Jackson, TX 77566 (US); HEATH, William, Midland Michigan 48674 (US); ATHEY, Phillip S., Midland Michigan 48674 (US); SHAH, Harshad M., Missouri City, TX 77459 (US); XU, Qiuyun, Pearland, TX 77584 (US); WILMOT, Nathan, Missouri City, TX 77459 (US)
(74) Representative: Beck Greener LLP
(86) International application number: PCT/US2014/069710
(87) International publication number: WO 2015/094896

(56) References cited:
- GB-A- 1 460 571
- US-A- 3 363 026
- US-A1- 2001 009 952
- MARJORIE FLORES ET AL: "A new two-stage curing system: Thiol-ene/epoxy homopolymerization using an allyl terminated hyperbranched polyester as reactive modifier", POLYMER, vol. 54, no. 21, 1 October 2013 (2013-10-01), pages 5473-5481, XP055170529, ISSN: 0032-3861, DOI: 10.1016/j.polymer.2013.07.056

## Description

This invention relates to a process for making polymers by curing a polyene and an epoxy resin with a mixture of thiol and amine curing agents.

Elastomeric (rubbery) polymers are in widespread use, in a wide variety of applications. Elastomeric polymers are used to manufacture tires, many types of seals, gaskets, tubing, flexible pipes and hoses, sleeves and covers for mechanical equipment, air management ducts, diaphragms, protective coatings for many substrates, shoe soles, wheels, impact absorbers, caulks and sealants, flexible spacers, and a wide range of cushioning products.

Many in-field applications require the elastomeric polymer to be formed and shaped at the point of use. Sealants are an illustration of this; many sealants must be applied as a liquid or semi-liquid material, which then must harden in place. In such instances, it is often impractical to use a thermoplastic material, as the necessary melt-processing equipment is either not available on-site or else cannot be adapted either technologically or economically to the specific application. Because of the expense of the necessary processing equipment, polymers that require melt-processing usually are limited to applications in which the part can be pre-formed in large quantities.

Although several types of these curable polymers are used commercially, polyurethanes are the type of polymers used in largest volumes in these applications. Polyurethanes can be produced easily and inexpensively at virtually any scale through the reaction of low molecular weight precursors. Through the judicious selection of starting materials and catalysts, these precursors can be caused to react at low to moderate temperatures, sometimes even at ambient conditions, to form a high molecular weight, strong elastomeric material.

A problem with polyurethanes is that, although the isocyanate chemistry is central to its benefits, there are potential worker exposure concerns if polyisocyanate compounds are not handled properly.

One way to limit human exposure to isocyanate compounds would be to provide an alternate curable polymer system that does not contain free isocyanate compounds. However, there is currently no other polymer system available that offers the advantages of rapidly curing from liquid, low viscosity precursors at ambient or at most moderately elevated temperatures, of being suited for small-scale, in-field applications (while also being entirely suitable for large industrial-scale part production) and of forming an elastomeric material that has a good combination of elongation and tensile strength.

Thiol-ene chemistry has been proposed as a route to making polymers from low viscosity precursors. The thiol-ene reaction can proceed extremely rapidly under some conditions and, as an addition reaction, does not produce reaction by-products that need to be removed. However, thiol-ene systems that cure to form elastomeric materials with properties similar to those of polyurethane elastomers have not been developed. The thiol-ene materials are mostly hard, glassy polymers having very low elongation.

Some attempts have been made to extend the properties of thiol-ene polymers by forming thiol-ene/epoxy hybrids. For example, Sangermano et al. in "Preparation and characterization of hybrid thiol-ene/epoxy UV-thermal dual-cured systems", Polym. Int. 2010:50:1046-1051, describe an attempt to make such hybrids. The products are not elastomeric. They have a single glass transition temperature in the range of 16-25°C by dynamic mechanical thermal analysis. Carioscia et al., "Evaluation and control of thiol-ene/thiol-epoxy hybrid networks", Polymer 48 (2007) 1526-1532, describe thiol-ene/thiol-epoxy interpenetrating network systems for dental applications. These are not elastomeric, either. They have single glass transition temperatures of approximately 71-75°C.

GB1460571 discloses an adhesive composition comprising 100 pbw epoxide resin; 10-150 pbw polymercaptan plus a polyene (III), and 1-40 pbw hardener for the epoxide resin.

Shin, et al., in "Segmented Polythiourethane Elastomers through Sequential Thiol-Ene and Thiol-Isocyanate Reactions", Macromolecules 2009, 42, 3294-3301, describe elastic polythiourethanes. These were synthesized by producing a thiol-terminated prepolymer by the phosphine-catalyzed thiol-ene reaction between 1,6-hexanedithiol and 1,4-butandiol diacrylate, and then chain-extending the prepolymer with a polyisocyanate compound. This synthesis is performed in solution and the product is isolated via precipitation. As such this is not an industrially viable process.

This invention is in one aspect a process for forming a polymer, comprising a) forming a reaction mixture containing 1) at least one polyene compound having an average of at least two groups containing aliphatic carbon-carbon double bonds capable of reaction with a thiol group, wherein at least one of such aliphatic carbon-carbon double bonds is separated from each other said aliphatic carbon-carbon double bond by an aliphatic spacer group having a weight of at least 1000 atomic mass units, 2) from 20 to 150 parts by weight, per 100 parts by weight of component 1), of at least one epoxy resin having an average of at least 1.5 epoxide groups per molecule and a number average epoxy equivalent weight of up to 1000 and 3) at least one thiol curing agent having at least two thiol groups and at least one amine curing agent having at least two amine hydrogens, the thiol and amine curing agents being present in a mole ratio of 1:99 to 99:1, and b) curing the reaction mixture to form the polymer.

The invention provides a versatile, non-isocyanate route to make polymers that have very useful properties. The invention is versatile from a processing standpoint, as the reaction mixture can be adapted to cure under a wide range of conditions through the selection of particular starting materials and catalysts. Often, the reactants polymerize spontaneously even at room temperature and can cure without applied heat to form a polymer having useful properties. This attribute is very beneficial in certain applications, especially certain in-field sealant and adhesive uses. Alternatively, the reaction mixture can be formulated to cure slowly until exposed to specific conditions such as an elevated temperature and in some cases a source of free radicals.

Similarly, the properties of the resulting polymer are easily varied to produce products having properties adapted to particular applications. One way of varying those properties is through adjustments in the proportions of the thiol and amine curing agents. Thus, a simple tool is provided by which polymer properties can be tuned within certain ranges to fit the needs of specific applications.

The polyene compound has at least two aliphatic carbon-carbon double bonds ("ene groups") capable of engaging in a thiol-ene addition reaction. At least one of these ene groups is spaced apart from each of the other ene groups by a flexible aliphatic spacer group having a weight of at least 1000 atomic mass units. It is preferred that each of these ene groups is spaced apart from each of the others by such a flexible aliphatic spacer group. The ene groups preferably are terminal, *i.e.,* at the ends of the molecular chains.

The polyene preferably has no more than 8, more preferably no more than 6, still more preferably no more than 4, ene groups.

The ene groups are aliphatic or, less preferably, alicyclic carbon-carbon double bonds in which a hydrogen atom is bonded to at least one of the carbon atoms. The carbon-carbon double bonds can take the form:

-RC=CR'R"

wherein R, R' and R" are independently hydrogen or an organic substituent, which organic substituent may be substituted, provided at least one of R, R' and R" is a hydrogen atom. Any of R, R' and R" may be, for example, alkyl or substituted alkyl group having up to 12, preferably up to 4 and more preferably up to 3 carbon atoms. R is preferably hydrogen or methyl. It is preferred that R' and R" are each hydrogen and more preferred that R, R' and R" are all hydrogen.

In some embodiments, the ene groups are provided in the form of terminal α,β-unsaturated carboxylate groups, such as, for example, acrylate (-O-C(O)-CH=CH₂) groups or methacrylate (-O-C(O)-C(CH₃)=CH₂) groups. In some embodiments, the ene groups are terminal vinyl (-CH=CH₂) groups. The vinyl groups may be vinylaryl groups, in which the vinyl group is bonded directly to a ring carbon of an aromatic ring such as a phenyl ring. In some embodiments, the ene groups are terminal allyl (-CH₂-CH=CH₂) groups. The polyene compound may have ene groups of different types, or all of the ene groups can be the same.

The spacer groups each have a weight of at least 1000 atomic mass units, preferably at least 1500 atomic mass units, more preferably at least 2000 atomic mass units, still more preferably at least 3000 atomic mass units and in some embodiments at least 4000 atomic mass units. The weight of the flexible spacer groups may be as much as 20,000, and preferably is up to 12,000, more preferably up to 8000. The spacer groups each preferably include at least one chain having a mass of at least 1000 atomic mass units which, upon curing, produces in the resulting polymer an elastomeric phase having a glass transition temperature of no greater than -20°C, preferably no greater than -35°C and more preferably no greater than -40°C.

The spacer groups are aliphatic. Preferred aliphatic spacer groups include groups that contain sequences of linear or branched aliphatic carbon-carbon single bonds and/or non-conjugated double bonds, aliphatic ether bonds, aliphatic amine bonds, and/or other like bonds within their main chain. Such sequences may be, for example at least 5 atoms or at least 10 atoms in length and may be up to several hundred atoms in length. These sequences may be interspersed with various linking groups such as amide, urethane, urea, ester, imide carbonate and the like. These sequences may be interspersed with aromatic groups, provided that such aromatic groups preferably constitute no more than 25%, preferably no more than 5% of the weight of the aliphatic spacer group.

In preferred embodiments, each of the spacer groups contains an aliphatic polyether chain, which may form all or a portion of each such spacer group. The aliphatic polyether chain preferably has a weight of at least 1500, more preferably at least 2000, still more preferably at least 3000, and in some embodiments at least 4000, to as much as 20,000, preferably up 12,000 and more preferably up to 8,000. The polyether chain may be, for example, a polymer of one or more of ethylene oxide, 1,2-propylene oxide, 1,2-butylene oxide, 2,3-butylene oxide, tetramethylene oxide, and the like. It has been found that polyether chains having side groups such as, for example, polymers of one or more of 1,2-propylene oxide, 1,2-butylene oxide, 2,3-butylene oxide and the like, provide particularly good results in forming a phase-segregated polymer having good properties. An especially preferred spacer group contains a poly(1,2-propylene oxide) chain or a random propylene oxide-co-ethylene oxide chain which contains up to 40%, preferably up to 25%, more preferably up to about 15%, by weight copolymerized ethylene oxide. Such especially preferred spacer groups may have terminal poly(ethylene oxide) segments, provided that such segments should not in the aggregate constitute more than 40%, preferably not more than 25% and more preferably not more than 15% of the total weight of the polyether.

A preferred class of polyene compounds are ene-terminated polyethers, especially ene-terminated polyethers having a molecular weight of at least 2000 (preferably at least 4000) up to 12,000 (preferably up to 8,000) and from 2 to 8, preferably 2 to 6 or 2 to 4 ene groups per molecule.

The polyether polyol used to make the preferred ene-terminated polyether in some embodiments has no more than 50 µeq/g of terminal unsaturation. Terminal unsaturation in a polyether polyol is indicative of the presence of monofunctional polyether species in the product. Therefore, lower amounts of terminal unsaturation indicate that the product has a lower quantity of monofunctional polyether species. The monofunctional polyether species are understood to form when the alkylene oxide (especially propylene oxide) isomerizes to form allyl alcohol and/or propenyl alcohol, which are monoalcohols that become alkoxylated to form monofunctional molecules. The level of terminal unsaturation may be, for example, less than 20 µeq/g, less than 10 µeq/g, less than 7 µeq/g or less than 5 µeq/g.

There are several approaches to making ene-terminated polyethers. One approach involves capping the hydroxyl groups of a polyether polyol with an ene compound that also has a functional group that reacts with a hydroxyl group to form a bond to the end of the polyether chain. Examples of such capping compounds include ene-containing isocyanate compounds such as, for example, 3-isopropenyl-α,α-dimethylbenzylisocyanate (TMI) or isocyanatoethylmethacrylate (IEM). Ene-terminated polyethers also can be prepared by capping a polyether polyol with an ethylenically unsaturated halide such as vinyl benzyl chloride, an ethylenically unsaturated siloxane such as vinyltrimethoxylsilane, or an ethylenically unsaturated epoxide compound.

Another approach to making an ene-terminated polyether is to cap a polyether polyol as described before with a polyisocyanate compound, preferably a diisocyanate. The polyisocyanate may be, for example, an aromatic polyisocyanate such as diphenylmethane diisocyanate or toluene diisocyanate, or an aliphatic polyisocyanate such as isophorone diisocyanate, hexamethylene diisocyanate, hydrogenated toluene diisocyanate, hydrogenated diphenylmethane diisocyanate, and the like. This produces a prepolymer that contains urethane groups and terminal isocyanate groups. The isocyanate groups are then capped by reaction with an isocyanate-reactive capping compound having a hydroxyl group and an ene group as described before. Examples of such isocyanate-reactive capping compounds include, for example, allyl alcohol, vinyl alcohol and hydroxyalkylacrylate and/or hydroxyalkylmethacrylate compounds such as hydroxyethylacrylate and hydroxyethylmethacrylate.

The epoxy resin is one or more materials having a number average of at least 1.5, preferably at least 1.8 epoxide groups per molecule, and an epoxy equivalent weight of up to 1000. The number average epoxy equivalent weight preferably is up to 500, more preferably is up to 250 and still more preferably up to 225. The epoxy resin preferably has up to eight epoxide groups and more preferably has 1.8 to 4, especially 1.8 to 3, epoxide groups per molecule.

The epoxy resin is preferably a liquid at room temperature, to facilitate easy mixing with other components. However, it is possible to use a solid (at 25°C) epoxy resin, particularly if the epoxy resin is soluble in the polyene compound, and/or if the epoxy resin is provided in the form of a solution in a suitable solvent.

Among the useful epoxy resins include, for example, polyglycidyl ethers of polyphenolic compounds. One type of polyphenolic compound is a diphenol (*i.e.,* has exactly two aromatic hydroxyl groups) such as, for example, resorcinol, catechol, hydroquinone, biphenol, bisphenol A, bisphenol AP (1,1-bis(4-hydroxylphenyl)-1-phenyl ethane), bisphenol F, bisphenol K, tetramethylbiphenol, or mixtures of two or more thereof. The polyglycidyl ether of such a diphenol may be advanced, provided that the epoxy equivalent weight is about 1000 or less, preferably about 250 or less and more preferably about 225 of less.

Suitable polyglycidyl ethers of polyphenols include those represented by structure (I) 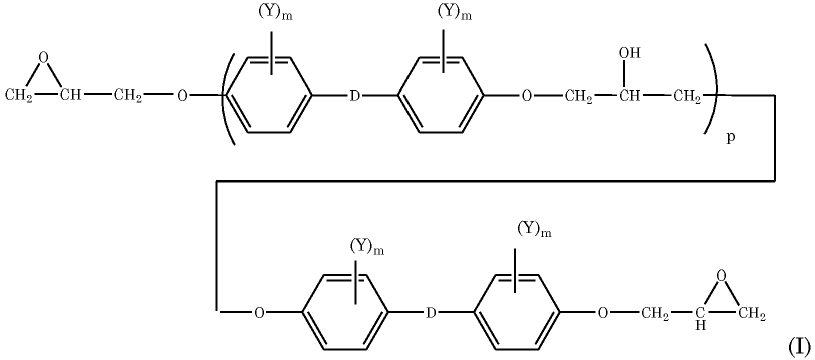 wherein each Y is independently a halogen atom, each D is a divalent hydrocarbon group suitably having from 1 to about 10, preferably from 1 to about 5, more preferably from 1 to about 3 carbon atoms, -S-, -S-S-, -SO-, -SO₂,-CO₃ -CO- or -O-, each m may be 0, 1, 2, 3 or 4 and p is a number such that the compound has an epoxy equivalent weight of up to 1000, preferably 170 to 500 and more preferably 170 to 225. p typically is from 0 to 1, especially from 0 to 0.5.

Fatty acid-modified polyglycidyl ethers of polyphenols, such as D.E.R. 3680 from The Dow Chemical Company, are useful epoxy resins.

Other useful polyglycidyl ethers of polyphenols include epoxy novolac resins. The epoxy novolac resin can be generally described as a methylene-bridged polyphenol compound, in which some or all of the phenol groups are capped with epichlorohydrin to produce the corresponding glycidyl ether. The phenol rings may be unsubstituted, or may contain one or more substituent groups which, if present, are preferably alkyl having up to six carbon atoms and more preferably methyl. The epoxy novolac resin in some embodiments has an epoxy equivalent weight of about 156 to 300, preferably about 170 to 225 and especially from 170 to 190. The epoxy novolac resin may contain, for example, from 2 to 10, preferably 3 to 6, more preferably 3 to 5 epoxide groups per molecule. Among the suitable epoxy novolac resins are those having the general structure: 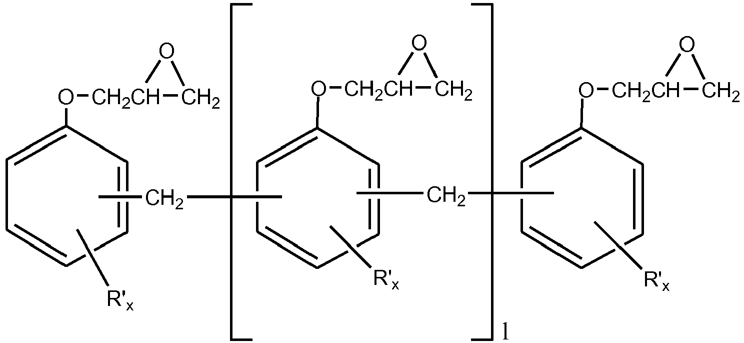 in which 1 is 0 to 8, preferably 1 to 4, more preferably 1 to 3, each R' is independently alkyl or inertly substituted alkyl, and each x is independently 0 to 4, preferably 0 to 2 and more preferably 0 to 1. R' is preferably methyl if present.

Other useful polyglycidyl ethers of polyphenol compounds include, for example, tris(glycidyloxyphenyl)methane, tetrakis(glycidyloxyphenyl)ethane, and the like.

Still other useful epoxy resins include polyglycidyl ethers of aliphatic polyols, in which the epoxy equivalent weight is up to 1000, preferably up to 500, more preferably up to 250, and especially up to 200. These may contain 2 to 6 epoxy groups per molecule. The polyols may be, for example, alkylene glycols and polyalkylene glycols such as ethylene glycol, diethylene glycol, tripropylene glycol, 1,2-propane diol, dipropylene glycol, tripropylene glycol and the like as well as higher functionality polyols such as glycerin, trimethylolpropane, trimethylolethane, pentaerythritol, sorbitol and the like. These preferably are used together with an aromatic epoxy resin such as a diglycidyl ether of a biphenol or an epoxy novolac resin.

Still other useful epoxy resins include tetraglycidyl diaminodiphenylmethane; oxazolidone-containing compounds as described in U. S. Patent No. 5,112,932; cycloaliphatic epoxides; and advanced epoxy-isocyanate copolymers such as those sold commercially as D.E.R.™ 592 and D.E.R.™ 6508 (The Dow Chemical Company) as well as those epoxy resins described in WO 2008/140906.

20 to 150 parts by weight of epoxy resin(s) may be provided to the reaction mixture, per 100 parts by weight of the ene compound(s) (component 1) above). This ratio of epoxy resin to ene compound has been found to provide a polymer having a combination of high elongation and good tensile strength. Within this broad range, elongation generally decreases with an increasing amount of epoxy resin while tensile strength and modulus tend to increase. When the amount of epoxy resin is within the foregoing range, the epoxy resin tends to cure to form a discontinuous resin phase dispersed in a continuous phase constituted mainly by the cured ene compound (component 1)).

If a greater amount of the epoxy resin is provided, a phase inversion often is seen, in which the cured epoxy resin mainly constitutes a continuous phase of the final polymer, resulting in a low elongation product having properties similar to conventional toughened epoxy resins. To avoid forming such a low elongation material, it is preferred to provide no more than 125 parts by weight of epoxy resin(s) per 100 parts by weight of the ene compound(s) (component 1)). A more preferred amount is up to 110 parts by weight epoxy resin(s) per 100 parts by weight of the ene compounds (component 1)), and a still more preferred amount is up to 105 parts. The preferred lower amount is at least 25 or at least 40 parts by weight epoxy resin per 100 parts by weight of the ene compound(s) (component 1)).

The reaction mixture further contains at least one polythiol curing agent that can react with both the ene groups of the ene compound (component 1)) and the epoxy groups of the epoxy resin(s) to form a high molecular weight polymer.

The polythiol curing agent contains at least two thiol groups. The polythiol preferably has an equivalent weight per thiol group of up to 500, more preferably up to 200 and still more preferably up to 150. This polythiol compound may contain up to 8, preferably up to 4, thiol groups per molecule.

Among the suitable polythiol compounds are mercaptoacetate and mercaptopropionate esters of low molecular weight polyols having 2 to 8, preferably 2 to 4 hydroxyl groups and an equivalent weight of up to about 75, in which all of the hydroxyl groups are esterified with the mercaptoacetate and/or mercaptopropionate. Examples of such low molecular weight polyols include, for example, ethylene glycol, diethylene glycol, triethylene glycol, 1,2-propane diol, 1,3-propane diol, dipropylene glycol, tripropylene glycol, 1,4-butane diol, 1,6-hexane diol, glycerin, trimethylolpropane, trimethylolethane, erythritol, pentaerythritol, sorbitol, sucrose and the like.

Other suitable polythiol compounds include alkylene dithiols such as 1,2-ethane dithiol, 1,2-propane dithiol, 1,3-propanedithiol, 1,4-butane dithiol, 1,6-hexane dithiol and the like, trithiols such as 1,2,3-trimercaptopropane, 1,2,3-tri(mercaptomethyl)propane, 1,2,3-tri(mercaptoethyl)ethane, (2,3-bis(2-mercaptoethyl)thio)1-propanethiol, and the like. Yet another useful polythiol compound is a mercapto-substituted fatty acid having at least 2 mercapto substituents on the fatty acid chains, such as, for example, that having the structure:

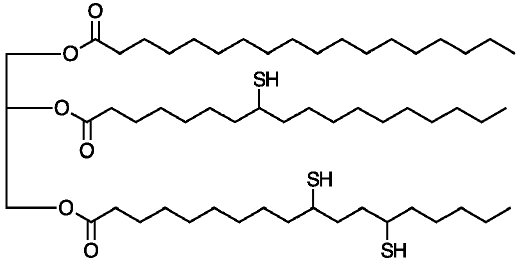

The reaction mixture further contains, in addition to the thiol curing agent, at least one amine compound having at least two amine hydrogens. This amine curing agent preferably has an equivalent weight per amine hydrogen of up to 150. A preferred equivalent weight per amine hydrogen is up to 100. Such a curing agent contains at least one primary amino group, and/or at least two secondary amino groups. The amine compound may be, for example, an aliphatic amine, an aromatic amine or an aminoalcohol.

In the case of an aliphatic amine, the amine hydrogens each may be attached to (a) a nitrogen atom bonded directly to an acyclic aliphatic carbon atom, (b) a nitrogen atom bonded directly to a carbon atom that forms part of a cycloaliphatic ring (which ring may be heterocyclic) and/or (c) a nitrogen atom that itself forms part of an aliphatic cyclic structure. Among the suitable curing agents include, for example, aminocyclohexanealkylamines, *i.e.,* cyclohexanes that have an amino substituent and an aminoalkyl substituent on the cyclohexane ring. Examples of such aminocyclohexanealkylamines include cyclohexanemethanamine, 1,8-diamino-p-menthane and 5-amino-1,3,3-trimethylcyclohexanemethylamine (isophorone diamine). Other useful amine curing agents include linear or branched polyalkylene polyamines such as, for example, diethylene triamine, triethylene diamine, tetraethylenepentamine, higher polyethylene polyamines, N',N'-bis(2-aminoethyl)ethane-1,2-diamine, 2-methylpentane-1,5-diamine and the like. Still other amine curing agents include gem-di-(cyclohexanylamino)-substituted alkanes, diaminocyclohexane, aminoethylpiperazine and bis((2-piperazine-1-yl)ethyl)amine.

Suitable aromatic amines include, for example, aniline, toluene diamine, diphenylmethanediamine, diethyltoluenediamine and the like.

Suitable aminoalcohols include, for example, ethanolamine, diethanolamine, 1-amino-2-propanol, diisopropanolamine, and the like.

The reaction mixture may contain the polythiol curing agent and the amine curing agent in a mole ratio of 1:99 to 99:1. Increasing the proportion of amine curing agent tends to lead to an increase in tensile strength and modulus, with a corresponding decrease in elongation, until the proportion of the amine curing agent reaches 50 to 60% by weight, after which further increases in the proportion of the amine curing agent tend to have little more effect on those properties. Therefore, in certain embodiments of the invention, the mole ratio of polythiol curing agent to amine curing agent is 25:75 to 99:1, or 40:60 to 99:1, or 50:50 to 99:1. Glass transition temperature also tends to increase as the proportion of amine curing agent increases.

The amount of the curing agent mixture used can vary considerably, depending on the properties that are wanted in the cured product, and in some cases depending on the type of curing reactions that are desired. The maximum amount of curing agent mixture typically provides up to 1.25 equivalents, preferably up to 1.15 equivalents and in some cases up to 1.05 equivalents of thiol and amine hydrogens combined per equivalent of ene and epoxy groups. Larger excesses of the curing agent tend to degrade polymer properties.

Because the epoxy resin(s) can polymerize with themselves and in many cases the ene compound also is capable of self-polymerization, it is possible to provide a large excess of epoxy and/or ene groups in the reaction mixture. Thus, for example, as few as 0.1, as few as 0.25 or as few as 0.5 combined equivalents of thiol groups and amine hydrogens in the curing agent can be provided per equivalent of epoxy and ene groups.

In some embodiments, the amount of curing agent is close to stoichiometric, *i.e.,* the combined number of thiol and amine hydrogen equivalents is somewhat close to the combined number of equivalents of epoxy and ene groups provided to the reaction mixture. Thus, for example, 0.75 to 1.25 equivalents, from 0.85 to 1.15 equivalents or from 0.85 to 1.05 equivalents of thiol and amine hydrogens can be provided by the curing agent per equivalent of epoxide and ene groups present in the reaction mixture.

The reaction mixture in some embodiments contains at least one basic catalyst. For purposes of this invention, a basic catalyst is a compound that is capable of directly or indirectly extracting a hydrogen from a thiol group to form a thiolate anion. In some embodiments, the basic catalyst does not contain thiol groups and/or amine hydrogens. The catalyst preferably is a material having a pKa of at least 5, preferably at least 10.

Among useful types of catalysts include inorganic compounds such as salts of a strong base and a weak acid, of which potassium carbonate and potassium carboxylates are examples; various amine compounds; and various phosphines.

Suitable amine catalysts include various tertiary amine compounds, cyclic or bicyclic amidine compounds such as 1,8-diazabicyclo-5.4.0-undecene-7, tertiary aminophenol compounds, benzyl tertiary amine compounds, imidazole compounds, or mixtures of any two or more thereof.

Tertiaryaminophenol compounds contain one or more phenolic groups and one or more tertiary amino groups. Examples of tertiary aminophenol compounds include mono-, bis- and tris(dimethylaminomethyl)phenol, as well as mixtures of two or more of these. Benzyl tertiary amine compounds are compounds having a tertiary nitrogen atom, in which at least one of the substituents on the tertiary nitrogen atom is a benzyl or substituted benzyl group. An example of a useful benzyl tertiary amine compound is N,N-dimethyl benzylamine.

Imidazole compounds contain one or more imidazole groups. Examples of imidazole compounds include, for example, imidazole, 2-methylimidazole, 2-ethyl-4-methylimidazole, 2-undecylimidazole, 2-heptadecylimidazole, 2-phenylimidazole, 2-phenyl-4-methylimidazole, 1-benzyl-2-methylimidazole, 2-ethylimidazole, 2-isopropylimidazole, 2-phenyl-4-benzylimidazole, 1-cyanoethyl-2-undecylimidazole, 1-cyanoethyl-2-ethyl-4-methylimidazole, 1-cyanoethyl-2-undecylimidazole, 1-cyanoethyl-2-isopropylimidazole, 1-cyanoethyl-2-phenylimidazole, 2,4-diamino-6-[2'-methylimidazolyl-(1)']ethyl-s-triazine, 2,4-diamino-6-[2'-ethylimidazolyl-(1)']ethyl-s-triazine, 2,4-diamino-6-[2'-undecylimidazolyl-(1)']ethyl-s-triazine, 2-methylimidazolium-isocyanuric acid adduct, 2-phenylimidazolium-isocyanuric acid adduct, 1-aminoethyl-2-methylimidazole, 2-phenyl-4,5-dihydroxylmethylimidazole, 2-phenyl-4-methyl-5-hydroxymethylimidazole, 2-phenyl-4-benzyl-5-hydroxymethylimidazole, and compounds containing two or more imidazole rings obtained by dehydrating any of the foregoing imidazole compounds or condensing them with formaldehyde.

Other useful catalysts include phosphine compounds, *i.e.,* compounds having the general formula R³₃P, wherein each R³ is hydrocarbyl or inertly substituted hydrocarbyl. Dimethylphenyl phosphine, trimethyl phosphine, triethylphosphine and the like are examples of such phosphine catalysts.

The basic catalyst is present in a catalytically effective amount. A suitable amount is typically from about 0.01 to about 10 moles of catalyst per equivalent of thiol and amine hydrogens in the curing agent. A preferred amount is 0.1 to 1 mole of catalyst per equivalent of thiol and amine hydrogens in the curing agent.

In addition to the foregoing ingredients, the reaction mixture may contain various other materials.

One such material is a free radical initiator, and in particular a thermally decomposable free radical initiator that produces free radicals when heated to a temperature in the range of 50 to 160°C, especially 65 to 120°C and more preferably 70 to 100°C. Such a thermally-decomposable free radical initiator compound may have a 10 minute half-life temperature of 50 to 120°C. The presence of the free radical initiator is preferred when the ene groups of the polyene compound are not easily curable via a cationic or anionic mechanism, as is often the case when the ene groups are vinyl, vinylaryl or allyl.

The presence of a free radical initiator can permit a dual-mechanism cure to take place, in which the ene reaction with a thiol takes place via a free radical mechanism, and the epoxy cure takes place via an anionic (base-catalyzed) mechanism. Such an approach permits the ene and epoxy reactions to take place sequentially, if desired, by subjecting the reaction mixture first to conditions that promote the formation of free radicals by the free radical initiator, and then to conditions sufficient to cure the epoxy resin component. Alternatively, both curing mechanisms can occur simultaneously by, for example, selecting a heat-activated free radical initiator, and exposing the reaction mixture to an elevated temperature sufficient to activate the free radical initiator and promote the epoxy curing reaction.

Certain ene compounds, in particular those having terminal acrylate and/or methacrylate ene groups, can homopolymerize in the presence of free radicals. Thus, in some embodiments, an excess of ene compounds having acrylate and/or methacrylate ene groups (over the amount of thiol and/or amine groups in the curing agent) can be provided in conjunction with a free radical initiator, to promote a certain amount of homopolymerization of the ene compound in addition to the ene/thiol and/or ene/amine curing reaction. In other embodiments, the ene compound contains, for example, vinyl and/or allyl ene groups, which do not homopolymerize to a significant extent under free radical conditions. In such a case, the presence of a free radical initiator may still be of benefit, as it allows for the dual cure mechanism in which the ene groups react with the thiol via a free radical mechanism and the epoxy cures via a base-catalyzed mechanism.

Examples of suitable free-radical generators include, for example, peroxy compounds (such as, for example, peroxides, persulfates, perborates and percarbonates), azo compounds and the like. Specific examples include hydrogen peroxide, di(decanoyl)peroxide, dilauroyl peroxide, t-butyl perneodecanoate, 1,1-dimethyl-3-hydroxybutyl peroxide-2-ethyl hexanoate, di(t-butyl)peroxide, t-butylperoxydiethyl acetate, t-butyl peroctoate, t-butyl peroxy isobutyrate, t-butyl peroxy-3,5,5-trimethyl hexanoate, t-butyl perbenzoate, t-butyl peroxy pivulate, t-amyl peroxy pivalate, t-butyl peroxy-2-ethyl hexanoate, lauroyl peroxide, cumene hydroperoxide, t-butyl hydroperoxide, azo bis(isobutyronitrile), 2,2'-azo bis(2-methylbutyronitrile) and the like.

A useful amount of free-radical initiator is 0.2 to 10 parts by weight per 100 parts by weight of ene compound(s).

Another optional component is one or more low equivalent weight ene compounds. Such compound(s) have one or more ene groups as described before and may have, for example, an equivalent weight per ene group of up to about 450, preferably up to about 250. Such low equivalent weight ene compounds can be produced, for example, by capping the hydroxyl groups of a low (up to 125, preferably up to 75) equivalent weight polyol with an unsaturated isocyanate compound such as 3-isopropenyl-a,a-dimethylbenzylisocyanate (TMI) or isocyanatoethylmethacrylate (IEM), an ethylenically unsaturated halide such as vinyl benzyl chloride, an ethylenically unsaturated siloxane such as vinyltrimethoxylsilane or an ethylenically unsaturated epoxide compound. Low equivalent weight ene compounds also can be produced by capping a polyisocyanate, preferably a diisocyanate, with an isocyanate-reactive capping compound having a hydroxyl group and an ene group as described before. Other useful low equivalent weight ene compounds include divinyl arene compounds such as divinyl benzene.

Mixtures of high and low equivalent weight ene compounds can be produced by (1) reacting an excess of a polyisocyanate with a polyether polyol, optionally in the presence of a chain extender, to form a quasi-prepolymer containing isocyanate terminated polyether compounds and unreacted (monomeric) polyisocyanates and then (2) capping the isocyanate groups with an isocyanate-reactive capping compound having a hydroxyl group and an ene group as described before. This caps the prepolymer molecules and the remaining monomeric isocyanate compounds to produce a mixture of high and low equivalent weight ene compounds.

The reaction mixture may contain other materials in addition to those described above. Such additional materials may include, for example, one or more colorants, one or more solvents or reactive diluents, one or more antioxidants, one or more preservatives, one or more fibers, one or more non-fibrous particulate fillers (including micron- and nano-particles), wetting agents and the like.

The reaction mixture preferably is substantially free of isocyanate compounds. Such compounds, if present at all, preferably constitute at most 1%, more preferably at most 0.5% of the weight of the reaction mixture. Most preferably the reaction mixture contains no measurable amount of isocyanate compounds.

The curing step can be performed in several ways.

In the simplest method, the starting materials are simply combined at ambient temperature and allowed to react. It is generally beneficial to combine the ene compound(s) with the epoxy resin(s) prior to adding the curing agent(s). It is preferred to intimately mix the ene compounds with the epoxy resins prior to adding the curing agent. This mixing can be done, for example, using a high speed laboratory mixer or other suitable device. If any of the ene compound and/or the epoxy resin(s) is solid at ambient temperature, the materials may be heated to melt or soften the solids to facilitate the mixing.

It is often convenient to formulate the starting materials into a two-component system. The first component contains the ene compound(s) and epoxy resin(s) and the second component includes the curing agents. It is generally preferred to formulate the basic catalyst into one or both of the curing agents to prevent premature reaction of the ene and/or epoxy compounds. Other ingredients can be formulated into either or both of the components, provided such compounds do not undesirably react therewith.

The reaction mixture is then applied to a substrate and/or introduced into a mold or other container where the cure is to take place.

A wide range of curing temperatures can be used, such as, for example, a temperature from 0 to 180°C. The curing reactions in many cases proceed at approxmiately room temperature (10 to 35°C), and curing can in such cases be effected without greater heating. In such cases, the curing agent can simply be mixed with the ene compound(s) and epoxy resin(s) at ambient temperature and the resulting mixture is permitted to cure. The curing reaction is generally exothermic, and a corresponding temperature rise may occur.

A faster and/or more complete cure often is seen at higher temperatures, and for that reason it may be desirable in some embodiments to heat the reaction mixture. This can be done, for example, by (a) heating one or more of the starting materials prior to mixing it with the others to form the reaction mixture and/or (b) heating the reaction mixture after it has been formed by combining the raw materials. If an elevated temperature cure is performed, a suitable curing temperature is 35 to 180°C. A more preferred curing temperature is 50 to 120°C and a still more preferred curing temperature is 50 to 90°C.

In some embodiments, curing can be performed by exposing the reaction mixture to free radicals and/or conditions that generate free radicals. This can be done, if desired, in addition to performing an elevated temperature cure. Free radicals can be provided in various ways. In some embodiments, the reaction mixture is exposed to a light source, preferably a source of ultraviolet light such as a mercury discharge lamp or a UV-producing LED. The ultraviolet light source may provide UV radiation at an intensity of, for example, 10 mW/cm² to 10 W/cm². In other embodiments, the reaction mixture is exposed to a plasma. In still other embodiments, the free radicals are generated by the decomposition of a free radical initiator compound as described before. In the last case, free radicals can be generated thermally by exposing the reaction mixture to an elevated temperature, thereby promoting a free radical curing mechanism as well as accelerating the reaction of the epoxy resin(s) with the curing agent.

Free radical conditions tend to promote the ene-thiol curing reaction but not the epoxy curing reaction. Therefore, it is usually necessary to provide a catalyst for the epoxy curing reaction even if a free radical cure is performed.

In some cases, especially when the ene compound contains acrylate and/or methacrylate ene groups, free radical conditions also can promote a homopolymerization of the ene compound(s). When it is desired to promote such a homopolymerization, the reaction mixture preferably includes at least one ene compound having acrylate and/or methacrylate ene groups, and also preferably includes an excess of ene and epoxy groups, relative to the amount of curing agent, such as at least 1.25, up to as many as 10, equivalents of ene and epoxy groups per equivalent of thiol and amine hydrogen in the curing agent. If the homopolymerization of the ene is not desired, it is preferred that the ene compounds are devoid of ene groups such as acrylate and methacrylate groups, which homopolymerize under free radical conditions.

The cured polymer in some embodiments has an elongation to break of at least 50%, as determined according to ASTM D1708. Elongation to break may be as much as 1000% or more. A typical elongation is 50 to 200%, especially 50 to 110%. Tensile strength is often at least 2 MPa (about 300 psi), in some embodiments is at least 10 MPa (about 1450 psi), and in especially preferred embodiments is at least 15 MPa (about 2175 psi). Tensile strength may be 30 MPa (about 4350 psi) or higher, but is more typically up to 21 MPa (about 3000 psi). The polymer in many embodiments has a Shore A hardness of 60 to 95, more typically 70 to 95 and still more typically 70 to 90, although harder polymers can be produced. An advantage of this invention is that properties can be tailored through the selection of starting materials, the ratios of starting materials, and to some extent the manner of cure.

A polymer of the invention may have a glass transition temperature from 20°C to 120°C or higher. In general, glass transition temperature tends to increase with increasing proportion of amine curing agent. In some embodiments, the glass transition temperature is at least 50°C or at least 70°C.

The process and polymer of the invention are very amenable for making a wide variety of coatings, adhesives, sealants and elastomeric materials such as seals and gaskets. Examples of these products include tires, seals, gaskets, tubing, flexible pipes and hoses, sleeves and covers for mechanical equipment, air management ducts, diaphragms, protective coatings for many substrates, shoe soles, wheels, impact absorbers, caulks and sealants, flexible spacers, and a wide range of cushioning products. The invention is very suitable for in-field applications, in which a coating, adhesive, sealant or elastomeric material is formed at the place of use.

The following examples are provided to illustrate the invention, but not limit the scope thereof. All parts and percentages are by weight unless otherwise indicated.

### Examples 1-9 and Comparative Sample A

### A. Synthesis of acrylate-terminated polyether

74.5 g (428 mmol) toluene diisocyanate (TDI, 80/20 mixture of 2,4- and 2,6-isomers) is charged to a dry 2 L 4-neck round bottom flask equipped with overhead stirring, temperature control probe, addition funnel, and nitrogen inlet. The flask and its contents are heated to 80°C, and 827 g (207 mmol) of a 4000 molecular weight, nominally difunctional, low terminal unsaturation poly(propylene oxide) diol (Voranol™ 4000LM from the Dow Chemical Company) is added. The solution is stirred for 30 minutes after the diol is added. A drop of dibutyltin dilaurate is added and the reaction stirred for an additional 2 hours. The product is an isocyanate-terminated prepolymer having an isocyanate content of 2.04% by weight, as determined by titration.

881.2 grams of the prepolymer is brought to a temperature of 45°C. 54.3 g (467.6 mmol) of hydroxyethylacrylate (95%) and a drop of dibutyltin dilaurate are added. The reaction mixture is stirred at 45°C until no measurable isocyanate groups remain as observed by FT-IR. The resulting product is a polyether capped with two terminal acrylate (-O-C(O)-CH=CH₂) groups per molecule.

### B. Production of Polymer

Example 1: 25 g of the acrylate-terminated polyether produced in A above and 25 g of a 180 epoxy equivalent weight diglycidyl ether of bisphenol A (D. E. R. 383, from The Dow Chemical Company) are mixed on a high-speed laboratory mixer until homogeneous. Separately, a 75:25 mole ratio blend of trimethylolpropane tris(mercaptopropionate) (0.114 moles) (Sigma Aldrich technical grade) and isophorone diamine (0.038 moles) is mixed with 76 mg (0.66 mole-% based on thiol groups) of 1,8-diazabicyclo[5.4.0]undec-7-ene (DBU, Sigma Aldrich technical grade). The thiol/amine/catalyst mixture is then mixed with the acrylate-terminated prepolymer/epoxy resin mixture on the high speed mixer to produce a clear mixture. These proportions of starting materials provide one combined equivalent of thiol and amine hydrogens per equivalent of acrylate and epoxide groups combined. A portion of the mixture is poured into a mold warmed to 50°C. The filled mold is then placed in a 50°C oven overnight. A tack-free plaque is obtained.

Example 2: Example 1 is repeated, except this time the curing agent contains a 50:50 mole ratio of trimethylolpropane tris(mercaptopropionate) and isophorone diamine. The proportions of starting materials provide about 1 combined equivalent of thiol and amine hydrogens per equivalent of acrylate and epoxide groups combined.

Example 3: Example 1 is repeated, except this time the curing agent contains a 25:75 mole ratio of trimethylolpropane tris(mercaptopropionate) and isophorone diamine. The proportions of starting materials again provide about 1 combined equivalent of thiol and amine hydrogens per equivalent of acrylate and epoxide groups combined.

Example 4: 25 g of the acrylate-terminated polyether produced in A above and 25 g of a 180 epoxy equivalent weight diglycidyl ether of bisphenol A (D. E. R. 383, from The Dow Chemical Company) are mixed on a high-speed laboratory mixture until homogeneous. Separately, trimethylolpropane tris(mercaptopropionate) (0.114 moles) (Sigma Aldrich technical grade) is mixed with aminoethylpiperazine (0.038 moles) and 76 mg (0.66 mole-% based on thiol groups) of 1,8-diazabicyclo[5.4.0]undec-7-ene (DBU, Sigma Aldrich technical grade). The thiol/amine/catalyst mixture is then mixed with the acrylate-terminated prepolymer/epoxy resin mixture on the high speed mixer to produce a clear mixture, which is cured as described with respect to Example 1. These proportions of starting materials provide about 1 combined equivalent of thiol and amine hydrogens per equivalent of acrylate and epoxide groups combined.

Example 5: Example 1 is repeated, except this time the curing agent contains a 50:50 mole ratio of trimethylolpropane tris(mercaptopropionate) and aminoethylpiperazine. The proportions of starting materials provide about 1 combined equivalents of thiol and amine hydrogens per equivalent of acrylate and epoxide groups combined.

Example 6: Example 1 is repeated, except this time the curing agent contains a 25:75 mole ratio of trimethylolpropane tris(mercaptopropionate) and aminoethylpiperazine. The proportions of starting materials again provide about 1 combined equivalent of thiol and amine hydrogens per equivalent of acrylate and epoxide groups combined.

Example 7: 25 g of the acrylate-terminated polyether produced in A above and 25 g of a 180 epoxy equivalent weight diglycidyl ether of bisphenol A (D. E. R. 383, from The Dow Chemical Company) are mixed on a high-speed laboratory mixture until homogeneous. Separately, trimethylolpropane tris(mercaptopropionate) (0.114 moles) (Sigma Aldrich technical grade) is mixed with bis((2-piperazine-1-yl)ethyl)amine (0.038 moles) and 76 mg (0.66 mole-% based on thiol groups) of 1,8-diazabicyclo[5.4.0]undec-7-ene (DBU, Sigma Aldrich technical grade). The thiol/amine/catalyst mixture is then mixed with the acrylate-terminated prepolymer/epoxy resin mixture on the high speed mixer to produce a clear mixture, which is cured as described with respect to Example 1. These proportions of starting materials provide about 1 combined equivalent of thiol and amine hydrogens per equivalent of acrylate and epoxide groups combined.

Example 8: Example 1 is repeated, except this time the curing agent contains a 50:50 mole ratio of trimethylolpropane tris(mercaptopropionate) and bis((2-piperazine-1-yl)ethyl)amine. The proportions of starting materials provide about 1 combined equivalent of thiol and amine hydrogens per equivalent of acrylate and epoxide groups combined.

Example 9: Example 1 is repeated, except this time the curing agent contains a 25:75 mole ratio of trimethylolpropane tris(mercaptopropionate) and bis((2-piperazine-1-yl)ethyl)amine. The proportions of starting materials again provide about 1 combined equivalent of thiol and amine hydrogens per equivalent of acrylate and epoxide groups combined.

Comparative Sample A: 35 g of the acrylate-terminated polyether produced in A above and 35 g of a 180 epoxy equivalent weight diglycidyl ether of bisphenol A (D. E. R. 383, from The Dow Chemical Company) are mixed on a high-speed laboratory mixture until homogeneous. Separately, 28.22 g trimethylolpropane tris(mercaptopropionate) (Sigma Aldrich technical grade) is mixed with 194 mg (0.6 mole-% based on thiol groups) of 1,8-diazabicyclo[5.4.0]undec-7-ene (DBU, Sigma Aldrich technical grade). The thiol/catalyst mixture is then mixed with the acrylate-terminated prepolymer/epoxy resin mixture on the high speed mixer to produce a clear mixture. These proportions of starting materials provide about 1.1 combined equivalents of thiol hydrogens per combined equivalents of acrylate and epoxide groups. A portion of the mixture is poured into a mold warmed to 50°C. The filled mold is then placed in a 50°C oven overnight. A tack-free plaque is obtained.

Property testing: The plaques formed in each of Examples 1-9 and Comparative Sample are evaluated for tensile strength, elongation and modulus per ASTM D1708. Glass transition temperature is measured on a 10 mg sample of each plaque by differential scanning calorimetry, equilibrating the sample at -90°C and heating to 200°C at the rate of 10°C/minute.

Results of the property testing are as indicated in the following Table 1.

**Table 1**

| Designation | A* | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|
| Amine Curing Agent | None | IPA¹ | | | AEP¹ | | | BPEA¹ | | |
| Mole-% Amine substitution | 0 | 25 | 50 | 75 | 25 | 50 | 75 | 25 | 50 | 75 |
| Tensile Strength (MPa) | 10.5 | 12.7 | 19.4 | 19.4 | 12.3 | 16.0 | 15.5 | 12.8 | 17.8 | 20.2 |
| Elongation (%) | 112 | 84 | 63 | 65 | 81 | 75 | 66 | 77 | 73 | 54 |
| T_{g}(°C) | 35 | 55 | 84 | 110 | 51 | 70 | 102 | 55 | 79 | 87 |

| | | | | | | | | | | |
|---|---|---|---|---|---|---|---|---|---|---|
| *Not an example of this invention. 1IPA is isophorone diamine. AEP is aminoethylpiperazine. BPEA is bis((2-piperazine-1-yl)ethyl)amine. | | | | | | | | | | |

As shown by the data in the Table, substituting an aliphatic amine curative for a portion of the thiol curing agent tends to lead to an increase in tensile strength, at some expense in elongation, up to about a 50% by weight replacement. These properties are consistent with an increase in crosslinking due to the higher functionality of the amine curing agents. Tensile and elongation tend to level off as more of the thiol is replaced with the amine curing agent. However, glass transition temperature increases with increasing proportion of amine in the curing agent, which is beneficial for higher temperature applications.

### Examples 10-12 and Comparative Sample B

Comparative Sample B: 25 g of the acrylate-terminated polyether produced in Example 1A above and 25 g of a 180 epoxy equivalent weight diglycidyl ether of bisphenol A (D. E. R. 383, from The Dow Chemical Company) are mixed on a high-speed laboratory mixture until homogeneous. Separately, 2,3-bis((2-mercaptoethyl)thio)-1-propanethiol (DMPT, 13.18 g, 0.15 equivalents SH) and DBU (0.0381 g, 2.50 x 10⁻⁴ moles) are blended. The thiol/catalyst mixture is then mixed with the acrylate-terminated prepolymer/epoxy resin mixture on the high speed mixer to produce a clear mixture. The reacting resin is poured into an open mold and allowed to cure at room temperature for 1-2 hours before being moved to a 50 °C oven to cure overnight.

Example 10: 25 g of the acrylate-terminated polyether produced in Example 1A above and 25 g of a 180 epoxy equivalent weight diglycidyl ether of bisphenol A (D. E. R. 383, from The Dow Chemical Company) are mixed on a high-speed laboratory mixture until homogeneous. Separately, DMPT (6.588 g, 0.076 moles), isophorone diamine (IPDA, 3.230 g, 0.076 moles), and DBU (0.0381 g, 2.50 x 10⁻⁴ moles) are blended. The thiol/amine/catalyst mixture is then mixed with the acrylate-terminated prepolymer/epoxy resin mixture on the high speed mixer to produce a clear mixture. The reacting resin is poured into an open mold and allowed to cure at room temperature for 1-2 hours before being moved to a 50 °C oven to cure overnight.

Example 11: 25 g of the acrylate-terminated polyether produced in Example 1A above and 25 g of a 180 epoxy equivalent weight diglycidyl ether of bisphenol A (D. E. R. 383, from The Dow Chemical Company) are mixed on a high-speed laboratory mixture until homogeneous. Separately, DMPT (6.588 g, 0.076 moles), 1-amino-2-propanol (IPA, 2.849 g, 0.076 moles), and DBU (0.0381 g, 2.50 x 10⁻⁴ moles) are blended. The thiol/amine/catalyst mixture is then mixed with the acrylate-terminated prepolymer/epoxy resin mixture on the high speed mixer to produce a clear mixture. The reacting resin is poured into an open mold and allowed to cure at room temperature for 1-2 hours before being moved to a 50 °C oven to cure overnight.

Example 12: 25 g of the acrylate-terminated polyether produced in Example 1A above and 25 g of a 180 epoxy equivalent weight diglycidyl ether of bisphenol A (D. E. R. 383, from The Dow Chemical Company) are mixed on a high-speed laboratory mixture until homogeneous. Separately, 2,3-bis((2-mercaptoethyl)thio)-1-propanethiol (6.588 g, 0.076 moles), IPDA (1.615 g, 0.038 moles), IPA (1.424 g, 0.038 moles NH) and DBU (0.0381 g, 2.50 x 10⁻⁴ moles) are blended. The thiol/amine/catalyst mixture is then mixed with the acrylate-terminated prepolymer/epoxy resin mixture on the high speed mixer to produce a clear mixture. The reacting resin is poured into an open mold and allowed to cure at room temperature for 1-2 hours before being moved to a 50 °C oven to cure overnight.

Tensile strength, elongation at break and glass transition temperature are measured for each of Examples 10-12 and Comparative Sample B. Results are as indicated in Table 2.

**Table 2**

| Designation | Curing Agent Mole Ratio (DMPT:IPDA:IPA) | Tensile Strength, MPa | Elongation at Break, % | Tg, °C |
|---|---|---|---|---|
| B* | 100:0:0 | 6.2 | 48.9 | 54 |
| 10 | 50:50:0 | 16.9 | 78.0 | 87 |
| 11 | 50:0:50 | 16.6 | 124 | 66 |
| 12 | 50:25:25 | 16.8 | 92.4 | 76 |

Substituting the amine curing agent for a portion of the thiol curing agent leads to increase in tensile strength and elongation, as well as glass transition temperature.

## Claims

1. A process for forming a polymer, comprising a) forming a reaction mixture containing 1) at least one polyene compound having an average of at least two groups containing aliphatic carbon-carbon double bonds capable of reaction with a thiol group, wherein at least one of such aliphatic carbon-carbon double bonds is separated from each other said aliphatic carbon-carbon double bond by an aliphatic spacer group having a weight of at least 1000 atomic mass units, 2) from 20 to 150 parts by weight, per 100 parts by weight of component 1), of at least one epoxy resin having an average of at least 1.5 epoxide groups per molecule and an epoxy equivalent weight of up to 1000 and 3) at least one thiol curing agent having at least two thiol groups and at least one amine curing agent having at least two amine hydrogens, the thiol and amine curing agents being present in a mole ratio of 1:99 to 99:1, and b) curing the reaction mixture to form the polymer.

2. The process of claim 1, wherein the aliphatic spacer group includes at least one poly(alkylene oxide) chain having a weight of at least 2000 atomic mass units.

3. The process of claim 1 or 2, wherein the epoxy resin has an epoxy equivalent weight of up to 250.

4. The process of any preceding claim, wherein the thiol curing agent includes at least one polythiol compound that contains from 2 to 4 thiol groups, and the thiol curing agent has a thiol equivalent weight of 50 to 250.

5. The process of any preceding claim, wherein the amine curing agent is an aliphatic amine in which the amine hydrogens each are attached to (a) a nitrogen atom bonded directly to an acyclic aliphatic carbon atom, (b) a nitrogen atom bonded directly to a carbon atom that forms part of a cycloaliphatic ring (which ring may contain heteroatoms) or (c) a nitrogen atom that itself forms part of a non-aromatic cyclic structure.

6. The process of any preceding claim, wherein the amine curing agent is one or more of cyclohexanemethanamine, 1,8-diamino-p-menthane, 5-amino-1,3,3-trimethylcyclohexanemethylamine, diethylene triamine, triethylene diamine, tetraethylenepentamine, a higher polyethylene polyamine, N',N'-bis(2-aminoethyl)ethane-1,2-diamine, 2-methylpentane-1,5-diamine, gem-di-(cyclohexanylamino)-substituted alkanes, diaminocyclohexane, aminoethylpiperazine and bis((2-piperazine-1-yl)ethyl)amine.

7. The process of any preceding claim, wherein the mole ratio of the thiol curing agent to amine curing agent is 25:75 to 99:1.

8. The process of any preceding claim, wherein the mole ratio of the thiol curing agent to amine curing agent is 40:60 to 99:1.

9. The process of any preceding claim wherein the reaction mixture contains at least one basic catalyst.

10. The process of any preceding claim, wherein the curing agent provides 0.75 to 1.25 combined equivalents of thiol and amine hydrogens per equivalent of epoxide and ene groups present in the reaction mixture.

11. The process of any preceding claim wherein the terminal aliphatic carbon-carbon double bonds are vinyl or acrylate groups.

12. The process of any preceding claim, wherein the reaction mixture further includes at least one thermally-decomposable free radical initiator compound and step b) includes a free-radical reaction of the polyene and a thiol curing agent, and a base-catalyzed reaction between the epoxy resin and a thiol curing agent.

13. A polymer made in accordance with any of claims 1-12.

14. The polymer of claim 13, which has an elongation to break of at least 50% and a tensile strength of at least 10 MPa as measured in the description.

## Patentansprüche

1. Ein Verfahren zum Bilden eines Polymers, das Folgendes beinhaltet: a) Bilden einer Reaktionsmischung, enthaltend 1) mindestens eine Polyenverbindung, die einen Durchschnitt von mindestens zwei Gruppen aufweist, die aliphatische Kohlenstoff-Kohlenstoff-Doppelbindungen, die mit einer Thiolgruppe eine Reaktion eingehen können, enthalten, wobei mindestens eine solcher aliphatischer Kohlenstoff-Kohlenstoff-Doppelbindungen durch eine aliphatische Spacergruppe, die ein Gewicht von mindestens 1 000 Atommasseneinheiten aufweist, voneinander getrennt ist, 2) zu 20 bis 150 Gewichtsteile pro 100 Gewichtsteile der Komponente 1) von mindestens einem Epoxidharz, das einen Durchschnitt von mindestens 1,5 Epoxidgruppen pro Molekül und ein Epoxidäquivalentgewicht von bis zu 1 000 aufweist, und 3) mindestens ein Thiolhärtungsmittel mit mindestens zwei Thiolgruppen und mindestens ein Aminhärtungsmittel mit mindestens zwei Aminwasserstoffen, wobei die Thiol- und Aminhärtungsmittel in einem Molverhältnis von 1 : 99 bis 99 : 1 vorliegen, und b) Härten der Reaktionsmischung zum Bilden des Polymers.

2. Verfahren gemäß Anspruch 1, wobei die aliphatische Spacergruppe mindestens eine Poly(alkylenoxid)kette, die ein Gewicht von mindestens 2 000 Atommasseneinheiten aufweist, umfasst.

3. Verfahren gemäß Anspruch 1 oder 2, wobei das Epoxidharz ein Epoxidäquivalentgewicht von bis zu 250 aufweist.

4. Verfahren gemäß einem der vorhergehenden Ansprüche, wobei das Thiolhärtungsmittel mindestens eine Polythiolverbindung umfasst, die 2 bis 4 Thiolgruppen enthält, und das Thiolhärtungsmittel ein Thioläquivalentgewicht von 50 bis 250 aufweist.

5. Verfahren gemäß einem der vorhergehenden Ansprüche, wobei das Aminhärtungsmittel ein aliphatisches Amin ist, bei dem die Aminwasserstoffe an (a) einem Stickstoffatom, das direkt an ein acyclisches aliphatisches Kohlenstoffatom gebunden ist, (b) einem Stickstoffatom, das direkt an ein Kohlenstoffatom gebunden ist, das einen Teil eines cycloaliphatischen Rings bildet (wobei der Ring Heteroatome enthalten kann) oder (c) einem Stickstoffatom, das selbst einen Teil einer nichtaromatischen cyclischen Struktur bildet, befestigt sind.

6. Verfahren gemäß einem der vorhergehenden Ansprüche, wobei das Aminhärtungsmittel eines oder mehrere von Folgenden ist: Cyclohexanmethanamin, 1,8-Diamino-p-menthan, 5-Amino-1,3,3-trimethylcyclohexanmethylamin, Diethylentriamin, Triethylendiamin, Tetraethylenpentamin, ein höheres Polyethylenpolyamin, N',N'-Bis(2-aminoethyl)ethan-1,2-diamin, 2-Methylpentan-1,5-diamin, mit gem-Di(cyclohexanylamino) substituierte Alkane, Diaminocyclohexan, Aminoethylpiperazin und Bis((2-piperazin-1-yl)ethyl)amin.

7. Verfahren gemäß einem der vorhergehenden Ansprüche, wobei das Molverhältnis von dem Thiolhärtungsmittel zu dem Aminhärtungsmittel 25 : 75 bis 99 : 1 beträgt.

8. Verfahren gemäß einem der vorhergehenden Ansprüche, wobei das Molverhältnis von dem Thiolhärtungsmittel zu dem Aminhärtungsmittel 40 : 60 bis 99 : 1 beträgt.

9. Verfahren gemäß einem der vorhergehenden Ansprüche, wobei die Reaktionsmischung mindestens einen basischen Katalysator enthält.

10. Verfahren gemäß einem der vorhergehenden Ansprüche, wobei das Härtungsmittel 0,75 bis 1,25 kombinierte Äquivalente an Thiol- und Aminwasserstoffen pro Äquivalent an Epoxid- und En-Gruppen, die in der Reaktionsmischung vorliegen, bereitstellt.

11. Verfahren gemäß einem der vorhergehenden Ansprüche, wobei die endständigen aliphatischen Kohlenstoff-Kohlenstoff-Doppelbindungen Vinyl- oder Acrylatgruppen sind.

12. Verfahren gemäß einem der vorhergehenden Ansprüche, wobei die Reaktionsmischung ferner mindestens eine thermisch zersetzbare Radikalinitiatorverbindung umfasst und Schritt b) eine Radikalreaktion des Polyens und eines Thiolhärtungsmittels und eine basenkatalysierte Reaktion zwischen dem Epoxidharz und einem Thiolhärtungsmittel umfasst.

13. Ein Polymer, das gemäß einem der Ansprüche 1-12 hergestellt ist.

14. Polymer gemäß Anspruch 13, das eine Bruchdehnung von mindestens 50 % und eine Zugfestigkeit von mindestens 10 MPa, wie in der Beschreibung gemessen, aufweist.

## Revendications

1. Un procédé pour former un polymère, comprenant a) la formation d'un mélange réactionnel contenant 1) au moins un composé polyène ayant une moyenne d'au moins deux groupes contenant des doubles liaisons carbone-carbone aliphatiques capables de réaction avec un groupe thiol, dans lequel au moins l'une de ces doubles liaisons carbone-carbone aliphatiques est séparée de chaque autre dite double liaison carbone-carbone aliphatique par un groupe espaceur aliphatique ayant un poids d'au moins 1 000 unités de masse atomique, 2) de 20 à 150 parties en poids, pour 100 parties en poids du constituant 1), d'au moins une résine époxy ayant une moyenne d'au moins 1,5 groupe époxyde par molécule et un poids équivalent d'époxy allant jusqu'à 1 000 et 3) au moins un agent de vulcanisation thiol ayant au moins deux groupes thiol et au moins un agent de vulcanisation amine ayant au moins deux hydrogènes d'amine, les agents de vulcanisation thiol et amine étant présents dans un rapport molaire de 1/99 à 99/1, et b) la vulcanisation du mélange réactionnel afin de former le polymère.

2. Le procédé de la revendication 1, dans lequel le groupe espaceur aliphatique inclut au moins une chaîne de poly(oxyde d'alkylène) ayant un poids d'au moins 2 000 unités de masse atomique.

3. Le procédé de la revendication 1 ou de la revendication 2, dans lequel la résine époxy a un poids équivalent d'époxy allant jusqu'à 250.

4. Le procédé de n'importe quelle revendication précédente, dans lequel l'agent de vulcanisation thiol inclut au moins un composé polythiol qui contient de 2 à 4 groupes thiol, et l'agent de vulcanisation thiol a un poids équivalent de thiol de 50 à 250.

5. Le procédé de n'importe quelle revendication précédente, dans lequel l'agent de vulcanisation amine est une amine aliphatique où les hydrogènes d'amine sont chacun attachés à (a) un atome d'azote lié directement à un atome de carbone aliphatique acyclique, (b) un atome d'azote lié directement à un atome de carbone qui fait partie d'un anneau cycloaliphatique (lequel anneau peut contenir des hétéroatomes) ou (c) un atome d'azote qui fait lui-même partie d'une structure cyclique non aromatique.

6. Le procédé de n'importe quelle revendication précédente, dans lequel l'agent de vulcanisation amine est un ou plusieurs éléments parmi une cyclohexaneméthanamine, un 1,8-diamino-p-menthane, une 5-amino-1,3,3-triméthylcyclohexaneméthylamine, une diéthylène triamine, une triéthylène diamine, une tétraéthylènepentamine, une polyamine de polyéthylène supérieur, une N',N'-bis(2-aminoéthyl)éthane-1,2-diamine, une 2-méthylpentane-1,5-diamine, des alcanes substitués par gem-di(cyclohexanylamino), un diaminocyclohexane, une aminoéthylpiperazine et une bis((2-piperazine-1-yl)éthyl)amine.

7. Le procédé de n'importe quelle revendication précédente, dans lequel le rapport molaire de l'agent de vulcanisation thiol à l'agent de vulcanisation amine est de 25/75 à 99/1.

8. Le procédé de n'importe quelle revendication précédente, dans lequel le rapport molaire de l'agent de vulcanisation thiol à l'agent de vulcanisation amine est de 40/60 à 99/1.

9. Le procédé de n'importe quelle revendication précédente dans lequel le mélange réactionnel contient au moins un catalyseur basique.

10. Le procédé de n'importe quelle revendication précédente, dans lequel l'agent de vulcanisation fournit de 0,75 à 1,25 équivalent combiné d'hydrogènes de thiol et d'amine par équivalent d'époxyde et de groupes ène présents dans le mélange réactionnel.

11. Le procédé de n'importe quelle revendication précédente dans lequel les doubles liaisons carbone-carbone aliphatiques terminales sont des groupes vinyle ou acrylate.

12. Le procédé de n'importe quelle revendication précédente, dans lequel le mélange réactionnel inclut en outre au moins un composé initiateur de radicaux libres décomposable thermiquement et l'étape b) inclut une réaction de radicaux libres du polyène et d'un agent de vulcanisation thiol, et une réaction catalysée par une base entre la résine époxy et un agent de vulcanisation thiol.

13. Un polymère fabriqué conformément à n'importe lesquelles des revendications 1 à 12.

14. Le polymère de la revendication 13, qui a un allongement à la rupture d'au moins 50 % et une résistance à la traction d'au moins 10 MPa tel que mesuré dans la description.
